# EUROPÄISCHE PATENTSCHRIFT

(11) **EP 2 476 936 B1**
(45) Veröffentlichungstag und Bekanntmachung des Hinweises auf die Patenterteilung: **02.04.2014**
(21) Anmeldenummer: 12150068.0
(22) Anmeldetag: 03.01.2012
(51) Int. Cl.: F16K 3/02, F16K 31/50, C10B 25/10

(54) **Antrieb für ein Schieberventil und Schieberventil**
Drive for a gate valve and gate valve
Entraînement pour soupape à coulisse et soupape à coulisse

(30) Priorität: 17.01.2011 DE 102011000170; 10.03.2011 DE 102011001186
(43) Veröffentlichungstag der Anmeldung: 18.07.2012
(73) Patentinhaber: Z & J Technologies GmbH, 52355 Düren (DE)
(72) Erfinder: Zingsem, Wolfgang, 52428 Jülich (DE); Kesternich, Ludwig, 52393 Hürtgenwald (DE)
(74) Vertreter: Popp, Eugen

(56) Entgegenhaltungen:
- DE-A1-102005 014 214
- DE-U- 1 898 716
- US-A- 4 054 261
- US-A- 4 253 483

## Beschreibung

Die Erfindung bezieht sich auf einen Antrieb für ein Schieberventil mit den Merkmalen des Oberbegriffs des Anspruchs 1. Ein derartiger Antrieb ist beispielsweise aus US 4,054,261 bekannt. Die Erfindung bezieht sich ferner auf ein Schieberventil mit einem derartigen Antrieb.

Zur Steuerung der Gas- und Feststoffströme in der Eisen- und Stahlindustrie sowie in der chemischen und petrochemischen Industrie werden bekanntermaßen Schieberventile eingesetzt, die eine in einem Gehäuse verschieblich gelagerte Schieberplatte aufweisen, die durch eine Hubbewegung eine Ventilöffnung im Gehäuse freigibt bzw. verschließt. Derartige Ventile sollen bei hohen Betriebstemperaturen, großen Nennweiten sowie hohen Schalthäufigkeiten lange wartungsfreie Betriebszeiten ermöglichen. Außerdem sind in der Regel kurze Bauhöhen der Ventile erforderlich.

Für den Antrieb der Schieberplatte sind hydraulische oder elektromechanische Systeme bekannt. Ein Beispiel für ein elektromechanisches System ist in der eingangs genannten US 4,054,261 beschrieben. Dieser Antrieb umfasst ein Doppelspindelsystem mit einem gemeinsamen Antriebsmotor, der über ein Umlenkgetriebe die beiden Spindeln in gleichlaufende Drehbewegungen versetzt. Auf den ortsfest angeordneten Spindeln sind Wandermuttern angeordnet, die mit einer Quertraverse fest verbunden sind. Durch eine Bewegung der Spindeln werden die Wandermuttern und die Quertraverse in Spindellängsrichtung verfahren. Die Quertraverse ist ihrerseits mit zwei Schubstangen verbunden, die am distalen Ende der Schieberplatte befestigt sind. Durch das Verfahren der Quertraverse wird die zum Öffnen und Verschließen des Schieberventils erforderliche Hubbewegung der Schieberplatte bewirkt.

Wenn der Gleichlauf der beiden Spindeln unterbrochen ist, ändert sich die Relativposition der beiden Wandermuttern zueinander und die Quertraverse verkantet. Der blockierte Antrieb ist nicht funktionsfähig und es kommt zu kostspieligen Ausfallzeiten. Zu einem Verkanten der Quertraverse kann es unter Umständen auch kommen, wenn bei der Hubbewegung der Schieberplatte eine asymmetrische Krafteinleitung in die Quertraverse auftritt, so dass unterschiedliche Kräfte auf die Wandermuttern wirken.

Ein weiteres Schieberventil für industrielle Armaturen ist aus US 4,253,483 bekannt, bei dem zwei Spindeln auf beiden Seiten einer Rohrdurchführung des Schieberventils angeordnet sind. Die auf den Spindeln sitzenden Wandermuttern sind mit Teleskoprohren verbunden, die an einer Schieberplatte befestigt sind. Die Teleskoprohre werden bei der Hubbewegung zum Verschließen bzw. zum Öffnen des Ventils über die Spindeln gezogen, so dass die Spindeln und Teleskoprohre konzentrisch angeordnet sind. Der Herstellungsaufwand derartiger Teleskopsysteme ist relativ groß, insbesondere wenn man bedenkt, dass die beiden Teleskoprohre jeweils eine eigene Führung benötigen.

Weitere Spindelantriebe für Schlebeventile sind beispielsweise aus DE 1 898 716 U1, die auf die Anmelderin zurückgeht, und WO 2010/111188 A2 bekannt. In beiden Fällen handelt es sich um Einzelspindeln, die über eine Wandermutter mit einem Teleskoprohr verbunden sind, das wiederum mit der Schieberplatte verbunden ist. Derartige Einzelspindeln müssen relativ groß dimensioniert sein, um die für die Hubbewegung der Schieberplatte erforderlichen Kräfte übertragen zu können.

Aufgabe der Erfindung ist es daher, einen Antrieb für ein Schieberventil anzugeben, der zuverlässig funktioniert und eine möglichst geringe Baulänge aufweist. Ferner ist es Aufgabe der Erfindung, ein Schieberventil mit einem derartigen Antrieb anzugeben,

Diese Aufgabe wird erfindungsgemäß durch den Antrieb gemäß Anspruch 1 bzw. durch das Schieberventil gemäß Anspruch 10 gelöst. Der Erfindung liegt der Gedanke zu Grunde, einen Antrieb für ein Schieberventil anzugeben, der zwei parallele Spindeln, insbesondere mit jeweils einem Trapezgewinde, aufweist, die durch einen Motor drehangetrieben sind. Der Antrieb weist Wandermuttern auf, die in die Spindeln eingreifen und durch eine Drehung der Spindeln in Spindellängsrichtung bewegbar sind, sowie ein quer zu den Spindeln angeordnetes Querjoch, das einerseits mit den Wandermuttern und andererseits mit einer Stange verbunden ist. Die Stange ist parallel zwischen den Spindeln angeordnet und mit einer Schieberplatte verbunden oder verbindbar, wobei die Stange durch den Motor für die Betätigung der Schieberplatte axial bewegbar ist. Die Wandermuttern und die Stange sind jeweils gelenkig, beispielsweise über Drehzapfen sowie über Kulissen und Kulissensteine, mit dem Querjoch verbunden. Durch diese gelenkigen Verbindungen der Wandermuttern und der Stange jeweils mit dem Querjoch wird eine Schrägstellung des Querjochs ausgeglichen, die beispielsweise auftreten kann, wenn die beiden Wandermuttern nicht gleichlaufen oder die beiden Spindeln nicht exakt parallel montiert sind. Die gelenkigen Verbindungen ermöglichen eine Drehbewegung des Querjoch aus der Normalposition senkrecht zu den Spindeln in eine Schrägstellung, ohne dass dabei signifikante Momente entstehen, die zu einem Verkanten des Jochs bzw. zur Blockade der Wandermuttern führen. Da sowohl die Wandermuttern als auch die Stange gelenkig mit dem Joch verbunden sind, kann das Querjoch auf der Antriebs- und der Abtriebsseite frei drehen. Es versteht sich, dass die Drehbewegung des Querjochs nicht vollkommen frei ist, sondern durch die Geometrie der Spindelanordnung begrenzt wird. Um ein Verkanten zu vermeiden, reicht die gelenkige Verbindung jedenfalls aus, die einen zuverlässigen Betrieb des Schieberventils verbessert und Ausfallzeiten weitestgehend vermeidet.

Die Doppelspindeln zusammen mit der zwischen den Spindeln parallel angeordneten Stange zur Betätigung der Schieberplatte ermöglichen eine kompakte Ausführung des Antriebes, insbesondere eine sehr kurze Baulänge des Antriebes. Durch die Doppelspindeln können besonders große Antriebskräfte übertragen werden, so dass der Antrieb auch für Ventile mit großen Nenndurchmessern eingesetzt werden kann. Die Erfindung verbindet also die Vorteile von Spindelantrieben, die sich in Bezug auf die kurze Baulänge und die Übertragung großer Kräfte ergeben, mit dem Vorteil der zuverlässigen Funktionsweise.

In vorteilhafter Ausgestaltung der Erfindung ist vorgesehen, dass die Wandermuttern jeweils wenigstens einen Drehzapfen aufweisen, der im Querjoch um eine erste Drehachse drehbar gelagert ist, wobei die erste Drehachse jeweils senkrecht zu den Spindeln verläuft. Durch die Drehbarkeit der Wandermuttern um die senkrecht zu den Spindeln verlaufende erste Drehachse wird bei einer Schrägstellung des Querjoches zu den Spindeln die Einleitung von Momenten vermieden, wenn beispielsweise die Wandermuttern mit unterschiedlichen Geschwindigkeiten bewegt werden. Bei einer weiteren bevorzugten Ausführungsform sind die Wandermuttern in Längsrichtung des Querjochs axial beweglich gelagert, insbesondere zusätzlich zur vorstehend genannten Drehlagerung axial beweglich gelagert. Die axial bewegliche Lagerung kann beispielsweise durch Kulissensteine erreicht werden, welche beweglich in im Querjoch befindliche Kulissen eingepasst und axial zum Querjoch verschiebbar sind. Durch die axiale Beweglichkeit der Kulissensteine in den Kulissen des Querjochs zusammen mit der Drehbarkeit der Wandermuttern um die senkrecht zu den Spindeln verlaufende erste Drehachse wird die Einleitung von Momenten in die Spindeln wirksam vermieden.

Eine besonders robuste Lagerung der Wandermuttern wird dadurch erreicht, dass die Wandermuttern vorteilhafterweise jeweils zwei Drehzapfen aufweisen, die gegenüber angeordnet und beide im Querjoch um dieselbe erste Drehachse drehbar gelagert sind. Die beiden Drehzapfen können in einer weiteren Ausgestaltung der Erfindung in zwei Kulissensteinen gelagert sein, die entlang derselben horizontalen Achse bzw. entlang der Längsachse des Querjochs verschiebbar sind. Die Drehzapfen sind also beide im Querjoch um dieselbe erste Drehachse drehbar gelagert und entlang der Längsachse des Querjochs verschiebbar.

Bei einer besonders bevorzugten Ausgestaltung weist das Querjoch Aussparungen auf, in denen Kullssensteine in Längsrichtung A des Querjochs axial beweglich angeordnet sind, wobei die Wandermuttern zwischen den Kulissensteine jeweils um die Spindellängsachse drehfest und um eine senkrecht zur Spindellängsachse verlaufende Drehachse, insbesondere die erste Drehachse D1, drehbar gelagert ist.

Die gelenkige Verbindung der Stange mit dem Querjoch kann beispielsweise dadurch erreicht werden, dass das freie Ende der Stange mit dem Querjoch durch ein Drehgelenk verbunden ist, das um eine zweite Drehachse beweglich ist, die senkrecht zur Stange verläuft. Wie bei den Wandermuttern wird durch das Drehgelenk vermieden, dass ein Moment aufgrund einer Schrägstellung des Querjoches in die Stange eingeleitet wird.

Die Spindeln können vorzugsweise durch eine gemeinsame Antriebswelle, insbesondere Schneckenwelle, mit dem Motor verbunden sein, wodurch der Gleichlauf der beiden Spindeln auf einfache Weise erreicht wird.

In vorteilhafter Ausgestaltung der Erfindung ist vorgesehen, dass die Spindeln in einem Rahmen mittels Spindellager gelagert und mit Antriebsgetrieben verbunden sind, wobei der Rahmen eine mit dem Gehäuse eines Schieberventils verbindbare Vorderplatte und eine davon beabstandete parallele Rückplatte umfasst. An der Vorderplatte sind die Gehäuse der Antriebsgetriebe und an der Rückplatte die Spindellager befestigt. Diese Ausgestaltung hat sich im Hinblick auf eine einfache Montage der Spindelanordnung als zweckmäßig erwiesen, da die einzelnen Antriebskomponenten im Rahmen einfach zugänglich sind.

Vorzugsweise ist der Motor ein Elektromotor, ein Pneumatikmotor oder ein Hydraulikmotor.

Die Erfindung wird im Folgenden anhand eines in den Zeichnungen dargestellten Ausführungsbeispiels weiter erläutert und beschrieben. Darin zeigen
- Fig. 1: eine perspektivische Ansicht eines Antriebs in der Schließstellung des Ventils nach einem erfindungsgemäßen Ausführungsbeispiel;
- Fig. 2: der Antrieb gemäß Fig. 1 in der Offenstellung des Ventils;
- Fig. 3: eine weitere perspektivische Ansicht des Antriebs in der Stellung gemäß Fig. 2, wobei ein Teil der Rückplatte des Rahmens zur Darstellung der dahinter befindlichen Antriebskomponenten entfernt ist;
- Fig. 4: eine Detailansicht des Motors gemäß Fig. 1 und
- Fig. 5: eine weitere perspektivische Darstellung des Antriebs in der Stellung gemäß Fig. 1, wobei zur besseren Ansicht des Antriebs Teile des Rahmens entfernt sind.

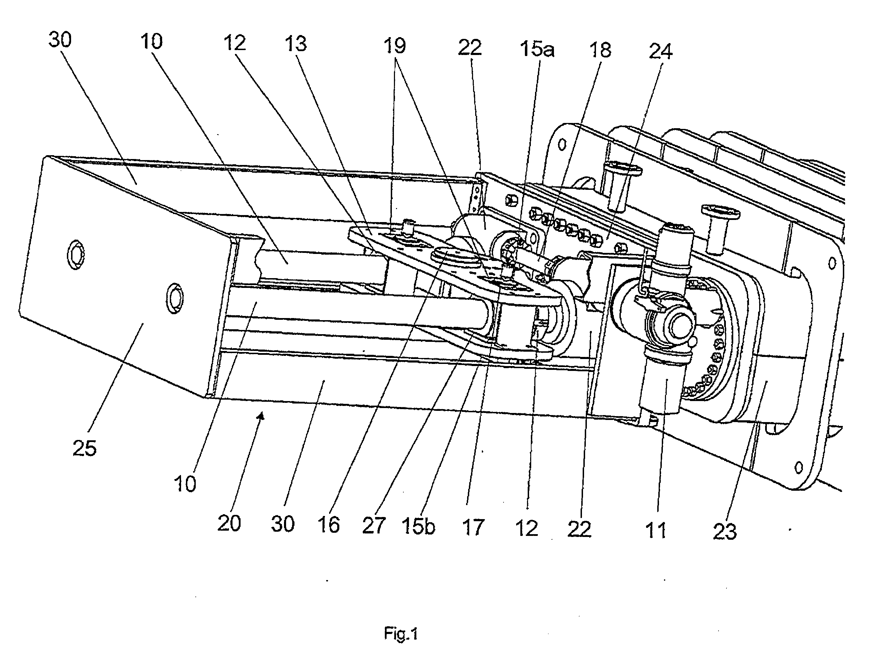

Fig. 1 zeigt in perspektivischer Ansicht einen Antrieb für ein Schieberventil bzw. ein Schieberventil mit einem Antrieb, das im Anlagenbau, beispielsweise in der chemischen und petrochemischen Industrie zum Einsatz kommt. Bei dem Schieber kann es sich beispielsweise um einen Coker-Schieber handeln bzw. einen Rohrbrückenschieber. Derartige Rohrbrückenschieber werden von der Anmelderin hergestellt. Der Antrieb kann für andere Schieber bzw. Ventile im Anlagenbau verwendet werden, da diese für diverse Armaturen anwendbar ist. Der Antrieb ist besonders für den delayed Coker-Antrieb geeignet.

Das Schieberventil weist in an sich bekannter Weise eine in den Figuren nicht dargestellte Schieberplatte auf, die in einem Gehäuse 23 verschieblich gelagert ist und eine Rohröffnung (nicht dargestellt) freigibt bzw. verschließt. Für die für den Betrieb des Ventils erforderliche Hubbewegung der Schieberplatte ist der in Fig. 1 dargestellte Antrieb vorgesehen. Der Antrieb wird elektrisch oder pneumatisch oder hydraulisch betätigt und weist dazu einen Elektromotor 11 oder einen Pneumatikmotor oder einen Hydraulikmotor auf, der über ein Getriebe mit dem Gestänge des Antriebs verbunden ist. Konkret weist der Antrieb eine Stange 14 auf, insbesondere eine Scnieberstange, die mit der Schieberplatte verbunden ist.

An dieser Stelle wird darauf hingewiesen, dass der Antrieb sowohl zusammen mit der Schieberplatte bzw. im Zusammenhang mit dem gesamten Schieberventil offenbart und beansprucht wird, als auch für sich genommen, also ohne die Schieberplatte bzw. das zugehörige Schieberventil. Insofern wird beansprucht, dass die Stange 14 mit der Schieberplatte verbunden oder mit dieser verbindbar ist.

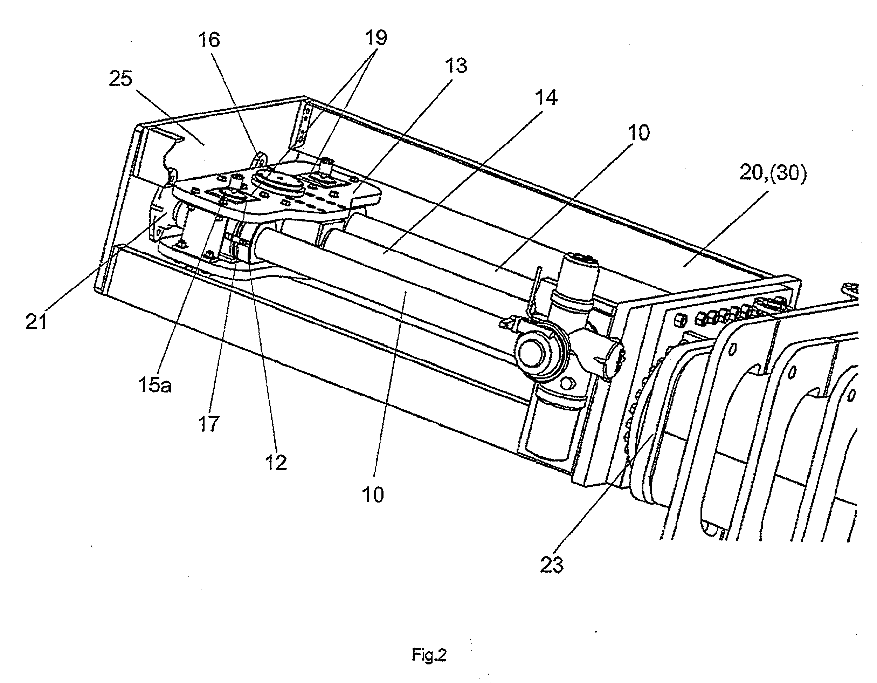

Wie in Fig. 2 zu erkennen, die den Antrieb in der ausgefahrenen Stellung, d.h. in der Offen-Position des Ventils zeigt, ist die Stange 14 mittig zwischen zwei parallelen Spindeln 10 angeordnet. Die Stange 14 und die beiden Spindeln 10 sind parallel in etwa in derselben Ebene, insbesondere in derselben Ebene, angeordnet. Wie in Fig. 2 ferner zu erkennen, handelt es sich bei der Stange 14 um die einzige Stange, die den Antrieb mit der Schieberplatte verbindet. An Stelle der Einzelstange 14 können mehrere Stangen, insbesondere zwei Stangen verwendet werden, die zwischen den Spindeln 10 angeordnet und mit der Schieberplatte verbunden sind.

Die Stange 14 ist mittig am proximalen Ende der Schieberplatte, d.h. am antriebsseitigen Ende der Schieberplatte, befestigt (nicht dargestellt). Der Durchmesser der Stange 14 ist etwas größer als der Durchmesser jeweils einer Spindel 10. Andere Größenverhältnisse sind möglich.

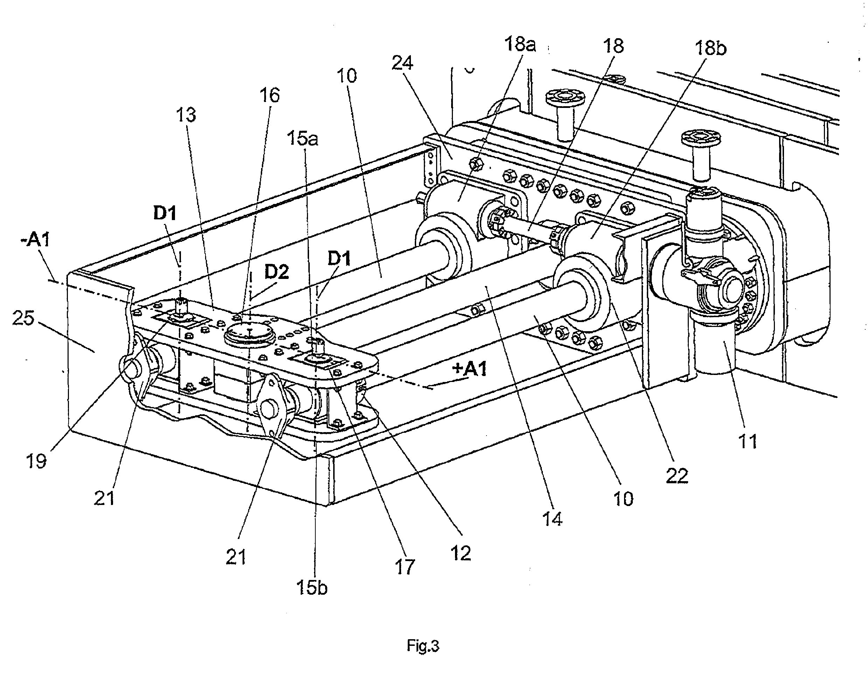

Bei den Spindeln 10 handelt es sich um Trapezgewindespindeln bzw. Schneckenspindeln, die eine Selbsthemmung ermöglichen. Die beiden Spindeln 10 werden durch einen gemeinsamen Motor 11, vorzugsweise einen Elektromotor 11 drehangetrieben. Hierzu ist ein Umlenkgetriebe mit einer Antriebswelle 18, insbesondere einer Schneckenwelle 18 vorgesehen (siehe auch Fig.3). Die Schneckenwelle 18 weist einen ersten Schneckenabschnitt 18a und einen zweiten Schneckenabschnitt 18b auf, die jeweils mit einer Spindel 10 kämmen. Die Schneckengetriebe sind jeweils in einem Gehäuse 22 angeordnet. Die Schneckenwelle 18 ist mit dem vorzugsweise eingesetzten Elektromotor 11 verbunden. Der Elektromotor 11 oder ein möglicher anderer Motor ist seitlich von den beiden Spindeln 10 angeordnet und am Rahmen 20 des Antriebs angeflanscht. Eine andere Anordnung des gemeinsamen Motors 11, beispielsweise eine zentrale Anordnung oberhalb der Stange 14 ist möglich. Es ist auch möglich, für jede Spindel 10 einen eigenen Motor, beispielsweise einen Elektromotor, vorzusehen, wobei die beiden Motoren für den Gleichlauf der Spindeln 10 synchronisiert sind.

Für die Übertragung der Antriebskraft von den beiden Spindeln 10 auf die Stange 14 ist ein Querjoch 13 bzw. eine Quertraverse vorgesehen, deren Längserstreckung senkrecht zu den Spindeln 10 verläuft. Das Querjoch 13 und die Spindeln 10 sind durch Wandermuttern 12 verbunden. Die beiden Spindeln sind also ortsfest angeordnet und die Umwandlung der rotatorischen Antriebsbewegung der Spindeln 10 in eine translatorische Bewegung erfolgt in an sich bekannter Weise durch die Längsbewegung der Wandermuttern 12 entlang der Spindeln 10.

Die Wandermuttern 12 sind dazu um die Spindellängsachse drehfest mit dem Querjoch 13 verbunden. Dadurch wird in an sich bekannter Weise erreicht, dass durch eine Drehung der Spindel 10 die jeweilige mit der Spindel 10 in Eingriff stehende Wandermutter 12 in Spindellängsrichtung bewegt wird. Die beiden Wandermuttern 12 nehmen das Querjoch 13 und die mit dem Querjoch 13 verbundene Stange 14 mit. Auf diese Weise wird die Hubbewegung bzw. die axiale Bewegung der Stange 14 und damit die Betätigung des Schieberventils erreicht.

Die gelenkige Verbindung zwischen den Wandermuttern 12 und dem Querjoch 13 wird bei dem Ausführungsbeispiel dadurch erreicht, dass die Wandermuttern 12 jeweils um eine erste Drehachse D1 drehbar mit dem Querjoch 13 verbunden sind, die senkrecht zu den Spindeln 10 verläuft. Desweiteren erlauben die Kulissensteine 19, in welchen die beiden Drehzapfen 15a, 15b der Wandermuttern 12 aufgenommen sind, ein axiales Spiel in den zugehörigen, im Querjoch 13 befindlichen Kulissen 17 in den Richtungen +A1 und -A1 Die Gleitlager 27 fixieren die jeweilige Wandermutter 12 gegen eine Drehung um die Spindellängsachse (drehfest um die Spindellängsachse). Die Drehzapfen 15a, 15b sowie die Kulissensteine 19 und die Kulissen 17 erlauben eine Drehung der Wandermutter 12 relativ zum Querjoch 13 um die erste Drehachse D1 senkrecht zur Spindel 10 sowie eine axiale Beweglichkeit der Wandermuttern 12 relativ zum Querjoch 13 in den Richtungen +A1 und -A1. Die Richtungen +A1 und - A1 verlaufen im Wesentlichen in Längsrichtung des Querjochs 13, d.h. im Wesentlichen quer zu den Spindellängsachsen. Andere Lager sind möglich.

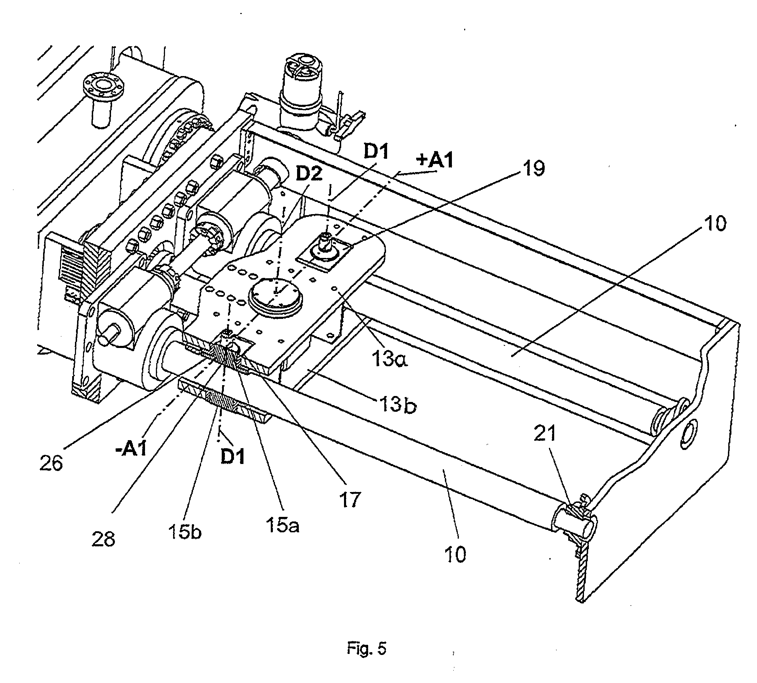

Der Aufbau der beiden Wandermuttern 12 ist am besten aus Fig. 5 ersichtlich. Die Wandermuttern 12 weisen jeweils eine Durchführung 26 mit einem Innengewinde auf, das mit dem Außengewinde der jeweiligen Spindel 10 in Eingriff steht. Die beiden Wandermuttern 12 weisen jeweils einen ersten Drehzapfen 15a auf, der im Querjoch 13 um die erste Drehachse D1 drehbar gelagert ist. Der erste Drehzapfen 15a erstreckt sich senkrecht zur Längsachse der Durchführung 26 und ist in dem Kulissenstein 19 angeordnet, der über die Kulisse 17 mit dem Querjoch 13 verbunden ist. Der Durchmesser des ersten Drehzapfens 15a ist ausreichend groß dimensioniert, um die im Betrieb auftretenden Antriebskräfte von den Wandermuttern 12 über das Querjoch 13 auf die Stange 14 zu übertragen. Bspw. beträgt der Durchmesser des ersten Drehzapfens 15a wenigstens 1/3, insbesondere wenigstens 1/2, des Durchmessers einer der Spindeln 10.

Die beiden Wandermuttern 12 weisen jeweils einen zweiten Drehzapfen 15b auf, der dem ersten Drehzapfen 15a gegenüber angeordnet und im Querjoch 13 um dieselbe erste Drehachse D1 wie der erste Drehzapfen 15a drehbar gelagert ist. Die Lagerung des zweiten Drehzapfens 15b im Querjoch 13 erfolgt entsprechend zur Lagerung des ersten Drehzapfens 15a durch einen Kulissenstein 19.. Alle Merkmale des ersten Drehzapfens 15a werden im Zusammenhang mit dem zweiten Drehzapfen 15b offenbart.

Im ersten Drehzapfen 15a ist eine Schmiermittelzufuhr 28 vorgesehen zur Schmierung der Wandermutter 12. Die Schmiermittelzufuhr weist einen Kanal auf, der sich entlang der ersten Drehachse D1 durch den ersten (oberen) Drehzapfen 15a bis zur Spindel 10 erstreckt und der mit einem Schmiermittelbehälter verbunden ist.

Die beiden Wandermuttern 12 sind entsprechend aufgebaut.

Die Stange 14, insbesondere das freie Ende der Stange 14, ist ebenfalls mit dem Querjoch 13 gelenkig verbunden und zwar durch ein Drehgelenk 16, das mit dem Querjoch 13 um eine zweite Drehachse D2 beweglich verbunden ist und Axialkräfte für die Hubbewegung der Stange 14 überträgt. Das Drehgelenk 16 ist mittig zwischen den Wandermuttern 12 im Querjoch 13 angeordnet. Im Normalbetrieb, d.h. bei normal angeordnetem Querjoch 13 schneiden die Drehachsen D1, D2 der Wandermuttern 12 und der Stange 14 eine gemeinsame Linie, die senkrecht zu den Spindeln 10 verläuft. Die ersten und zweiten Drehachsen D1, D2 verlaufen jeweils parallel zueinander und stehen jeweils senkrecht zu den Spindeln 10 bzw. zur Stange 14.

Das Querjoch 13 ist also sowohl mit den beiden Spindeln 10 über die Wandermuttern 12 als auch mit der Stange 14 jeweils gelenkig verbunden. Bei einer Schrägstellung des Querjochs 13 beispielsweise aufgrund unterschiedlicher Laufgeschwindigkeiten der Wandermuttern 12 kann das Querjoch 13 daher um die zweite Drehachse D2 drehen. Die Drehzapfen 15a und 15b der Wandermuttern 12 drehen jeweils um die erste Drehachse D1, während die Kulissensteine 19 in den jeweiligen Kulissenn 17 eine axiale Ausgleichbewegung in Richtung +A1 bzw. -A1 ausführen. Dadurch wird vermieden, dass das Querjoch 13 verkantet. Trotz der Schrägstellung des Querjochs 13 ist weiterhin ein Betrieb des Schieberventils möglich.

Das Querjoch 13 weist zwei parallel beabstandete Platten 13a, 13b auf, die oberhalb und unterhalb der beiden Spindeln 10 angeordnet sind. In der oberhalb angeordneten ersten Platte 13a ist der erste Drehzapfen 15a und in der unterhalb angeordneten zweiten Platte 13b ist der zweiten Drehzapfen 15b der jeweiligen Wandermutter 12 drehbar gelagert. Außerdem ist zwischen den beiden Platten 13a, 13b das Drehgelenk 16 der Stange 14 angeordnet. Die beiden Platten 13a, 13b bilden dabei eine Gabel, in der die beiden Wandermuttern 12 durch die Gleitlager 27 jeweils um die Spindellängsachse drehfest und um die senkrecht zur Spindellängsachse verlaufende erste Drehachse D1 drehbar gelagert sind.

Aus Fig. 1 und 2 ist ersichtlich, dass die Spindeln 10 in einem Rahmen 20 gelagert sind. Dazu sind Spindellager 21 vorgesehen (siehe Fig. 2 und 3), die mit einer Rückplatte 25 des Rahmens 20 verschraubt sind. Die zur Rückplatte 25 parallel angeordnete Vorderplatte 24 des Rahmens 20 trägt die Gehäuse der Antriebsgetriebe 22 der Spindeln 10. Die Vorderplatte 24 ist mit einer Stirnfläche des Gehäuses 23 des Schieberventils verbunden, insbesondere verschraubt. Die Vorderplatte 24 und Rückplatte 25 sind durch Verstrebungen 30 miteinander verbunden. An Stelle des Rahmens 20 kann auch eine andere Art von Gehäuse für den Antrieb vorgesehen sein.

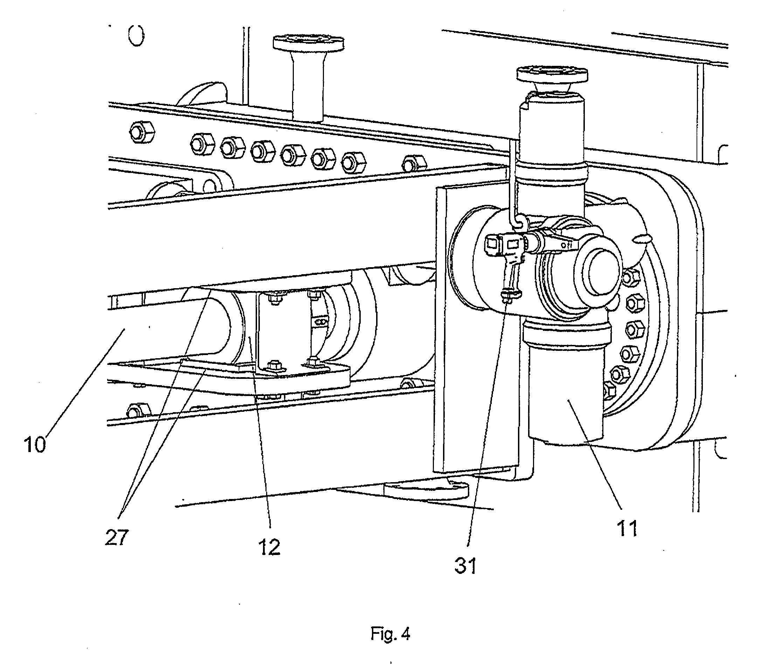

In Fig. 4 ist ein Ausführungsbeispiel dargestellt, bei dem eine pneumatische Notbetätigung 31 an der Antriebseinheit vorgesehen ist.

Die vorstehend erläuterte Antriebseinheit zeichnet sich durch ihre im Vergleich mit anderen Antriebseinheiten besonders kurze Gesamtbauhöhe bzw. Gesamtbaulänge aus. Durch die Spindeltriebe weist der Antrieb ein sehr kompaktes Design auf. Außerdem ist eine automatische Zentralschmierung möglich, so dass der Antrieb über einen langen Zeitraum wartungsfrei funktioniert. Die Konstruktion ist preisgünstig, da überwiegend Standard-Zukaufteile verwendet werden können. Der Antrieb ist flexibel einsetzbar und kann für diverse Armaturen, insbesondere Spezialarmaturen verwendet werden. Der Antrieb eignet sich besonders gut im Zusammenhang mit einem Elektromotor, insbesondere für den delayed Coker-Antrieb.

### Bezugszeichen

- 10: Spindel
- 11: Motor
- 12: Wandermutter
- 13: Querjoch
- 14: Stange
- 15a, 15b: Drehzapfen
- 16: Drehgelenk
- 17: Kulisse
- 18: Schneckenwelle
- 19: Kulissenstein
- 20: Rahmen
- 21: Spindellager
- 22: Antriebsgetriebe/Schneckengetriebe
- 23: Gehäuse
- 24: Vorderplatte
- 25: Rückplatte
- 26: Durchführung
- 27: Gleitlager
- 28: Schmiermittelzufuhr
- 29: frei
- 30: Verstrebungen
- 31: Notbetätigung

## Patentansprüche

1. Antrieb für ein Schieberventil aufweisend zwei parallele Spindeln (10), die durch wenigstens einen Motor (11) drehangetrieben sind, Wandermuttern (12), die in die Spindeln (10) eingreifen und durch eine Drehung der Spindeln (10) in Spindellängsrichtung bewegbar sind, und ein quer zu den Spindeln (10) angeordnetes Querjoch (13), das einerseits mit den Wandermuttern (12) und andererseits mit einer Stange (14) verbunden ist, die parallel zwischen den Spindeln (10) angeordnet und mit einer Schieberplatte verbunden oder verbindbar ist, wobei die Stange (14) durch den Motor (11) für die Betätigung der Schieberplatte axial bewegbar ist,
**dadurch gekennzeichnet, dass**
die Wandermuttern (12) und die Stange (14) jeweils gelenkig mit dem Querjoch (13) verbunden sind.

2. Antrieb nach Anspruch 1,
**dadurch gekennzeichnet, dass**
die Wandermuttern (12) jeweils wenigstens einen Drehzapfen (15a) aufweisen, der im Querjoch (13) um eine erste Drehachse D1 drehbar gelagert ist, wobei die erste Drehachse D1 jeweils senkrecht zu den Spindeln (10) verläuft.

3. Antrieb nach Anspruch 1 oder 2,
**dadurch gekennzeichnet, dass**
die Wandermuttern (12) jeweils zwei Drehzapfen (15a, 15b) aufweisen, die gegenüber angeordnet und beide im Querjoch (13) um dieselbe erste Drehachse D1 drehbar gelagert sind.

4. Antrieb nach einem der Ansprüche 1 bis 3,
**dadurch gekennzeichnet, dass**
die Wandermuttern (12) in Längsrichtung A des Querjochs (13) axial beweglich gelagert sind.

5. Antrieb nach Anspruch 4
**dadurch gekennzeichnet, dass**
das Querjoch (13) Aussparungen (17) aufweist, in denen Kulissensteine (19) in Längsrichtung A des Querjochs (13) axial beweglich angeordnet sind, wobei die Wandermuttern (12) zwischen den Kulissensteine (19) jeweils um die Spindellängsachse drehfest und um eine senkrecht zur Spindellängsachse verlaufende Drehachse, insbesondere die erste Drehachse D1, drehbar gelagert ist.

6. Antrieb nach einem der vorhergehenden Ansprüche,
**dadurch gekennzeichnet, dass**
das freie Ende der Stange (14) mit dem Querjoch (13) durch ein Drehgelenk (16) verbunden ist, das um eine zweite Drehachse D2 beweglich ist, die senkrecht zur Stange (14) verläuft.

7. Antrieb nach einem der vorhergehenden Ansprüche,
**dadurch gekennzeichnet, dass**
die Spindeln (10) durch eine gemeinsame Antriebswelle, insbesondere Schneckenwelle (18) mit dem Motor (11) verbunden sind.

8. Antrieb nach einem der vorhergehenden Ansprüche,
**dadurch gekennzeichnet, dass**
die Spindeln (10) in einem Rahmen (20) mittels Spindellager (21) gelagert und mit Antriebsgetrieben (22) verbunden sind, wobei der Rahmen (20) eine mit dem Gehäuse (23) eines Schieberventils verbindbare Vorderplatte (24) und eine davon beabstandete parallele Rückplatte (25) umfasst, wobei an der Vorderplatte (24) die Gehäuse der Antriebsgetriebe (22) und an der Rückplatte (25) die Spindellager (21) befestigt sind.

9. Antrieb nach einem der vorhergehenden Ansprüche,
**dadurch gekennzeichnet, dass**
der Motor (11) einen Elektromotor, Pneumatikmotor oder Hydraulikmotor umfasst.

10. Schieberventil mit einem Antrieb nach einem der vorhergehenden Ansprüche.

## Claims

1. Drive means for a slide valve having two parallel spindles (10) which are driven in rotation by at least one motor (11), travelling nuts (12) which engage the spindles (10) and are movable in the longitudinal direction of the spindles by rotation of the spindles (10), and a cross-yoke (13) which is arranged transversely with respect to the spindles (10) and is connected to the travelling nuts (12) on the one hand and to a rod (14) on the other hand, which rod is arranged in parallel between the spindles (10) and is connected or connectible to a slide plate, the rod (14) being axially movable by the motor (11) for the actuation of the slide plate,
**characterised in that**
the travelling nuts (12) and the rod (14) are each articulatedly connected to the cross-yoke (13).

2. Drive means according to claim 1,
**characterised in that**
the travelling nuts (12) each have at least one pivot pin (15a) which is mounted in the cross-yoke (13) so as to be pivotable about a first pivot axis D1, the first pivot axis D1 running perpendicular to the spindles (10) in each case.

3. Drive means according to claim 1 or 2,
**characterised in that**
the travelling nuts (12) each have two pivot pins (15a, 15b) which are arranged opposite one another and are both mounted in the cross-yoke (13) so as to be pivotable about the same first pivot axis D1.

4. Drive means according to any one of claims 1 to 3,
**characterised in that**
the travelling nuts (12) are mounted so as to be axially movable in the longitudinal direction A of the cross-yoke (13).

5. Drive means according to claim 4,
**characterised in that**
the cross-yoke (13) has apertures (17) in which sliding blocks (19) are arranged so as to be axially movable in the longitudinal direction A of the cross-yoke (13), the travelling nuts (12) each being mounted between the sliding blocks (19) so as to be fixed against rotation about the longitudinal axis of the spindles but rotatable about a pivot axis running perpendicular to the longitudinal axis of the spindles, especially about the first pivot axis D1.

6. Drive means according to any one of the preceding claims,
**characterised in that**
the free end of the rod (14) is connected to the cross-yoke (13) by way of a pivot joint (16) which is movable about a second pivot axis D2 running perpendicular to the rod (14).

7. Drive means according to any one of the preceding claims,
**characterised in that**
the spindles (10) are connected to the motor (11) by a common drive shaft, especially a worm shaft (18).

8. Drive means according to any one of the preceding claims,
**characterised in that**
the spindles (10) are mounted in a frame (20) by means of spindle bearings (21) and are connected to drive gears (22), the frame (20) comprising a front plate (24) connectible to the housing (23) of a slide valve and a parallel rear plate (25) spaced apart therefrom, the housings of the drive gears (22) being attached to the front plate (24) and the spindle bearings (21) being attached to the rear plate (25).

9. Drive means according to any one of the preceding claims,
**characterised in that**
the motor (11) comprises an electric motor, pneumatic motor or hydraulic motor.

10. Slide valve having a drive means according to any one of the preceding claims.

## Revendications

1. Entraînement pour un distributeur à tiroir présentant deux broches (10) parallèles qui sont entraînées en rotation par au moins un moteur (11), des écrous mobiles (12) qui s'engagent dans les broches (10) et peuvent être déplacés dans la direction longitudinale des broches par une rotation des broches (10), et une traverse fixe (13) agencée transversalement par rapport aux broches (10) qui est reliée d'un côté avec les écrous mobiles (12) et de l'autre côté avec une tige (14) qui est agencée parallèlement entre les broches (10) et qui est ou peut être reliée à un plateau de distributeur, la tige (14) pouvant être déplacée dans la direction axiale par le moteur (11) pour l'actionnement du plateau de distributeur, **caractérisé en ce que** les écrous mobiles (12) et la tige (14) sont chacun reliés de façon articulée à la traverse fixe (13).

2. Entraînement selon la revendication 1, **caractérisé en ce que** les écrous mobiles (12) présentent chacun au moins un tenon rotatif (15a) qui est monté dans la traverse fixe (13) de façon à pouvoir tourner autour d'un premier axe de rotation D1, le premier axe de rotation D1 s'étendant toujours perpendiculairement aux broches (10).

3. Entraînement selon la revendication 1 ou 2, **caractérisé en ce que** les écrous mobiles (12) présentent chacun deux tenons rotatifs (15a, 15b) qui sont situés à l'opposé l'un de l'autre et qui sont tous les deux montés dans la traverse fixe (13) de façon à pouvoir tourner autour du même premier axe de rotation D1.

4. Entraînement selon l'une des revendications 1 à 3, **caractérisé en ce que** les écrous mobiles (12) sont montés de façon à pouvoir être déplacés axialement dans la direction longitudinale A de la traverse fixe (13).

5. Entraînement selon la revendication 4, **caractérisé en ce que** la traverse fixe (13) présente des évidements (17) dans lesquels des coulisseaux (19) sont agencés de façon à pouvoir être déplacés axialement dans la direction longitudinale A de la traverse fixe (13), les écrous mobiles (12) étant chacun montés entre les coulisseaux (19) de façon à ne pas pouvoir tourner autour de l'axe longitudinal des broches et à pouvoir tourner autour d'un axe de rotation s'étendant perpendiculairement à l'axe longitudinal des broches, en particulier le premier axe de rotation D1.

6. Entraînement selon l'une des revendications précédentes, **caractérisé en ce que** l'extrémité libre de la tige (14) est reliée avec la traverse fixe (13) par le biais d'un joint articulé (16) qui peut être déplacé autour d'un deuxième axe de rotation D2 qui s'étend perpendiculairement à la tige (14).

7. Entraînement selon l'une des revendications précédentes, **caractérisé en ce que** les broches (10) sont reliées au moteur (11) par un arbre d'entraînement commun, en particulier un arbre de vis sans fin (18).

8. Entraînement selon l'une des revendications précédentes, **caractérisé en ce que** les broches (10) sont montées dans un châssis (20) au moyen de roulements de broche (21) et reliées avec des mécanismes d'entraînement (22), le châssis (20) comprenant une plaque avant (24) pouvant être reliée au logement (23) d'un distributeur à tiroir et une plaque arrière (25) parallèle à distance de celle-ci, les logements des mécanismes d'entraînement (22) étant fixés sur la plaque avant (24) et les roulements de broche (21) sur la plaque arrière (25).

9. Entraînement selon l'une des revendications précédentes, **caractérisé en ce que** le moteur (11) comprend un moteur électrique, un moteur pneumatique ou un moteur hydraulique.

10. Distributeur à tiroir ayant un entraînement selon l'une des revendications précédentes.
